# EUROPÄISCHE PATENTSCHRIFT

(11) **EP 0 416 072 B1**
(45) Veröffentlichungstag und Bekanntmachung des Hinweises auf die Patenterteilung: **18.12.1996**
(21) Anmeldenummer: 90904780.5
(22) Anmeldetag: 23.03.1990
(51) Int. Cl.: G06F 15/02

(54) **Verfahren und Vorrichtung zum Bearbeiten einer Zahlenkolonne**
Process and device for treating a column of figures
Procédé et dispositif de traitement de chiffres disposés dans une colonne

(30) Priorität: 23.03.1989 CH 1083/89; 05.06.1989 CH 2094/89; 11.06.1989 CH 2164/89; 14.08.1989 CH 2961/89; 16.08.1989 CH 2990/89; 16.08.1989 CH 2991/89; 18.08.1989 CH 3009/89; 26.08.1989 CH 3081/89; 19.09.1989 CH 3393/89; 11.10.1989 CH 3698/89
(43) Veröffentlichungstag der Anmeldung: 13.03.1991
(73) Patentinhaber: HAUSER, Walter A, CH-8914 Aeugst am Albis (CH)
(72) Erfinder: HAUSER, Walter A, CH-8914 Aeugst am Albis (CH)
(74) Vertreter: Hotz, Klaus, Dipl.-El.-Ing./ETH Patentanwalt
(86) Internationale Anmeldenummer: CH9000079
(87) Internationale Veröffentlichungsnummer: WO9011566

(56) Entgegenhaltungen:
- US-A- 4 016 411
- US-A- 4 091 270
- PATENT ABSTRACTS OF JAPAN, Band 6, Nr. 221 (P-153)(1099), 5. November 1982; & JP-A-57125471 (Sharp K.K.) 4. August 1982
- JP-56033423
- Tafel, Hans Jörg et al.: "Ein- und Ausgabegeräte der Datentechnik" Carl Hanser Verlag, 1982, Seiten 22-37

## Beschreibung

Die Erfindung betrifft ein Verfahren und eine Vorrichtung zum Bearbeiten einer Zahlenkolonne nach den Oberbegriffen der Patentansprüche 1 bzw. 11.

Zahlen können direkt bei ihrer Entstehung zur Durchführung arithmetischer Operationen eingegeben werden. Oft liegen solche Zahlen aber auch schriftlich vor.

Der Trend zur Eingabe von Information direkt bei ihrer Entstehung verstärkt sich, womit eine effiziente manuelle Eingabe an Bedeutung gewinnt. Jedoch wird trotz weiteren Vordringens von Elektronik zur Informationsverarbeitung im Büro auch der Datenträger Papier in den nächsten Jahren nicht verschwinden, da Papier als Informationsträger gerade auch für Zahlen sehr angenehme Eigenschaften hat: Es kann ohne jede Infrastruktur als Daten-/Informationsträger gebraucht werden. Auf Papier niedergelegte Information ist fixiert, d.h., nur mit Handhabungsaufwand änderbar. Information auf Papier suggeriert Echtheit, weshalb auch in Zukunft endgültige Ergebnisse bevorzugt auf Papier weitergereicht werden dürften. Allerdings besitzt Papier auch unangenehme Eigenschaften: Es stellt in der Phase der Informationserarbeitung einen die Produktivität hemmenden Informationsträger dar.

Betrachtet man Menschen und Maschinen als Partner bei Ausführung von Informationsbearbeitung im Büro, leidet das gemeinschaftliche Zusammenwirken darunter, dass einerseits das Individium Mensch einen zwar vollkommenen Kommunikationskanal für die flüchtige, sprachliche Information besitzt, für die Verarbeitung visueller Information wiedergabemässig (Output) aber auf sehr langsame motorische Organe angewiesen ist, andererseits die elektronischen Systeme für die Erzeugung und Verarbeitung visueller Information höchst effizient ausgestattet sind, eingabeseitig aber sehr schwach sind. Betrachtet man Büroarbeit als einen ständigen Zyklus von Eingeben, Verarbeiten und Ausgeben von Information, wobei sich beim Einsatz von Maschinen humane und maschinelle Zyklen aneinanderreihen, wird ersichtlich, dass sich die Schwachstelle des Individiums Mensch bei der Wiedergabe von Information (Ouput) frontal mit der Schwachstelle der Maschinen im Input trifft.

Arithmetische Operationen im Sinne und mit der Funktion einer elektronischen Rechenmaschine aufgrund schriftlich vorliegender Zahlen werden beispielsweise durchgeführt, indem die Ziffern, Zahlen und Operationszeichen durch den Menschen visuell abgelesen, die erkannten Ziffern und Operationsarten manuell eingegeben werden und durch eine elektronische Rechenmaschine maschinell verarbeitet werden.

Die vorliegende Erfindung will des Menschen Informationswiedergabe (Output) bei der Durchführung arithmetischer Operationen im Sinne und mit der Funktionen einer elektronischen Rechenmaschine unterstützen, und die Maschine, die Vorrichtung zur Durchführung von arithmetischen Operationen, beim Input verbessern. Sie setzt sich zum Ziel, die Durchführung arithmetischer Operationen im Sinne und mit der Funktion einer elektronischen Rechenmaschine wesentlich zu vereinfachen. Dieses Ziel wird erfindungsgemäss durch die in den Ansprüchen definierten Massnahmen und Merkmale erreicht.

Auslösung der erfindungsgemässen Verfahren und Vorrichtungen war die Erkenntnis, dass die Addition oder Nachaddition einer schriftlich vorliegenden Zahlenkolonne ohne schriftlich vorliegende Operationszeichen ein sehr grosses Rationalisierungspotential aufweist, wenn mit einer optischen Erfassungsvorrichtung die Zahlenkolonne in einer Bewegung erfasst wird und dieser einen Erfassungsbewegung multiplikativ die Operationsart Addition entweder vollautomatisch oder durch einmalige Betätigung der Operationstaste Addition zugeordnet werden kann.

Eine wesentliche Ausführungsart der vorliegenden Erfindung beinhaltet damit die Durchführung einer Addition einer Zahlenkolonne mittels einer Vorrichtung zur Zeichenerkennung durch Verbindung einer einzigen Erfassungsbewegung und mit einer multiplikativen Zuordnung der Operationsart Addition vollautomatisch oder durch einmalige Betätigung der Operationstaste Addition.

Bei der Erarbeitung des erfindungsgemässen technischen Lösungsweges wurde untersucht, wie die eingesetzten technischen Hilfsmittel das Rationalisierungspotential erschliessen können, dies auch mit dem Ziel, zu erkennen, ob die dahinter stehenden Prinzipien nicht auch allgemeiner in neuartiger Synthese von technischen Hilfsmitteln oder in neuer Automatisierung für die Verbesserung der Durchführung arithmetischer Operationen im Sinne und mit der Funktion einer elektronischen Rechenmaschine eingesetzt werden können.

Dies ist möglich, und zwar sowohl bei automatischer Erfassung der Ziffern von Zahlen mittels einer Vorrichtung zur optischen Zeichenerkennung wie auch bei manueller Eingabe der Ziffern.

Die erfindungsgemässe neue Ausführung der Addition einer Zahlenkolonne durch Verbindung einer einzigen Erfassungsbewegung mit einer multiplikativen Zuordnung der Operationsart trug den Kern für weitere erfindungsgemässe Verfahren für die Durchführung arithmetischer Operationen im Sinne und mit der Funktion einer elektronischen Rechenmaschine in sich.

Alle erfindungsgemässen Verfahren beziehen sich auf die Durchführung arithmetischer Operationen im Sinne und mit der Funktion einer elektronischen Rechenmaschine, wobei sie nicht ausschliesslich an die Vorrichtung einer konventionellen Rechenmaschine gebunden sind. Sie beziehen sich dagegen nicht auf die blosse Eingabe von Zahlen in eine fest programmierte und fixierte Weiterverarbeitung durch ein EDV-Programm.

Die Durchführung arithmetischer Operationen im Sinne und mit der Funktion einer elektronischen Rechenmaschine gemäss der vorliegenden Erfindung kann in folgende Teilschritte zerlegt werden:
1. Erkennen von Ziffern der massgeblichen Zahlen
2. Ziffern eingeben
3. Ziffern zur Zahl abgrenzen
4. Operationsart eingeben
5. Zuordnung von Operationsart zur Zahl oder zur Verknüpfung zweier Zahlen
6. Durchführung der arithmetischen Operation
7. Kontrolle der Ziffern der Zahl und der durchgeführten Operation

Bei der Synthese der Teilschritte und der technischen Hilfsmittel sind folgende Rationalisierungstypen interessant:
1. Alle gleichartigen Teilschritte können mit einer technischen Vorrichtung in einem Arbeitsgang nacheinander oder zusammengefasst ausgeführt werden.
2. Die Teilschritte lassen sich durch eine Wirkverbindung so miteinander verknüpfen, dass die Ausführung des einen Teilschrittes automatisch die Durchführung des anderen Teilschrittes bewirkt.
3. Die Durchführung eines Teilschrittes an sich wird mit einer technischen Vorrichtung automatisiert durchgeführt.

Gemäss dem Stand der Technik werden bisher arithmetische Operationen wie folgt ausgeführt:
- Die Ziffern einer Zahl werden visuell erkannt und manuell eingegeben.
- Die Operationsart wird zwischen (oder vor) der Eingabe der Ziffern der einen Zahl und der Eingabe der Ziffern einer nachfolgenden Zahl manuell eingegeben, wodurch die Ziffern einer Zahl gleichzeitig auch zur Zahl abgegrenzt werden, und die Zahlen miteinander verknüpft werden.
- Das Ergebnis wird entweder sofort oder nach Betätigung einer Ergebnistaste berechnet.

Werden Zahlen gemäss dem Verfahren der umgekehrten polnischen Notation arithmetisch verknüpft, werden die Ziffern auch durch manuelle Betätigung einer Enter-Taste zur Zahl abgegrenzt.

Beispielsweise ist aus der US-A-4,091,270 eine Vorrichtung bekannt, mit welcher Informationen, z.B. Zahlen, in strichcodierter Form von einem Gerät zur optischen Zeichenerkennung erfasst werden. Ebenfalls durch das Gerät sind weitere Angaben zu erfassen, welche die Abgrenzung zwischen zwei Zahlen sowie Befehle, ggfs. ganze Programme, zur Bearbeitung, beispielsweise mittels einer arithmetischen Operation, der erfassten Informationen enthalten; auch diese Angaben liegen in strichcodierter Form vor. Ferner ist eine Zuordnung der Bearbeitungsart zu den erfassten Informationen vorgesehen. Die Verwendung dieses Gerätes verursacht mancherlei Umtriebe, indem nicht nur die zu erfassenden Informationen sondern auch die Wahl der auf die Zahlen anzuwendenden Bearbeitung codiert sein muss.

Im weiteren beschreibt die JP-56033423 ein Rechengerät zur Bearbeitung von Zahlen mittels wählbaren arithmetischen Operationen; bei diesem Gerät müssen die zu bearbeitenden Zahlen nicht codiert sein sondern können als Zahlen erfasst werden können. Die Zahlen werden horizontal eingelesen, d.h. man erfasst die Zahlen ziffernweise, beginnend mit der Ziffer der grössten Stelle der Zahl. Nachteilig ist bei diesem Gerät, dass besondere Massnahmen getroffen werden müssen, um die Zahlenabgrenzung zu erfassen, entweder, indem die Erfassungsvorrichtung bzw. die Vorrichtung zur optischen Zeichenerkennung nach dem Erfassen jeder Zahl abgehoben werden muss oder indem diese Vorrichtung zur Zahlenabgrenzung besonderer Zeichen bedarf, beispielsweise Linien oder ggfs. eine Leerstelle von einer gewissen Länge hinter der Zahl, so dass die Zahlen zwar nicht codiert aber aufbereitet werden müssen.

Als Hinterqrundinformationen sei noch die EP-0,258 577 B1 genannt, welche ein optisches Zeichenlesegerät beschreibt, das in einer Kolonne angeordnete Zahlen erfassen kann. Es handelt sich dabei aber ausschliesslich um ein Gerät zum Erfassen von Zahlen, jedoch ohne irgendeine Möglichkeit Bearbeitung der Zahlen mittels zu wählenden bzw. zuzuordnenden arithmetischen Operationen.

Die Aufgabe der Erfindung besteht darin, ein Verfahren der eingangs genannten Art sowie eine Vorrichtung zu dessen Durchführung vorzuschlagen, welches eine einfache Bearbeitung von in einer Zahlenkolonne angeordneten, nicht aufbereiteten Zahlen ermöglicht.

Diese Aufgabe wird durch die kennzeichnenden Teile der Patentansprüche 1 und 11 gelöst.

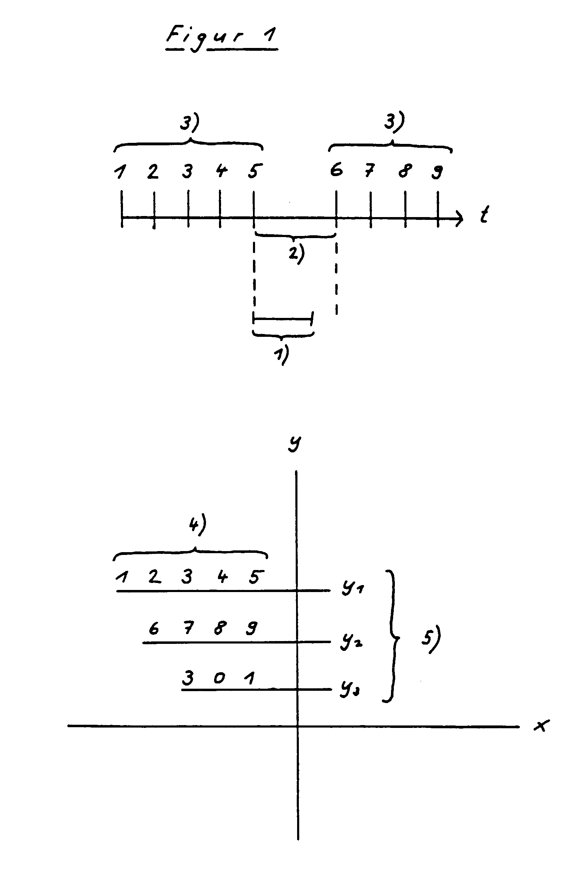

Bei den erfindungsgemässen Verfahren werden die Ziffern einer Zahl nicht durch manuelle Betätigung einer Taste für die Operationsart oder einer Enter-Tastenzur Zahl abgegrenzt, sondern es wird Teilschritt 3, die Abgrenzung der Ziffern zur Zahl, an sich automatisiert und dadurch ein Rationalisierungseffekt gemass Typ 3 erreicht. Die Automatisierung kann erreicht werden, indem ein zu definierendes Zeitintervall (1) zwischen der Eingabe-von Ziffern überschritten wird oder bei beispielsweise schriftlich vorliegenden Zahlen gewisse Kriterien der räumlichen oder räumlich-unterschiedlichen Anordnung (5) festgestellt werden oder indem die automatische Abgrenzung erfolgt, nachdem eine definierte Anzahl Ziffern nach der Feststellung einer Kommastelle eingegeben worden ist (vgl. Figur 1). Alle Verfahren sind sowohl bei manueller Eingabe der Ziffern wie auch bei automatisierter Eingabe mittels einer Vorrichtung zur optischen Zeichenerkennung durchführbar. Bei manueller Eingabe der Ziffern einer Zahl können beispielsweise auch zwei räumlich getrennte Tastaturen verwendet werden, die alternierend für die eine Zahl und für die nachfolgende Zahl usw. zur Eingabe der Ziffern verwendet werden und die Ziffern zur Zahl abgegrenzt werden, wenn der Tastaturwechsel erfolgt. Einrichtungen zur Feststellung der Ueberschreitung eines Zeitintervalles können auch bei konventionellen Rechenmaschinen ohne automatisierte Eingabe der Ziffern eingesetzt werden.

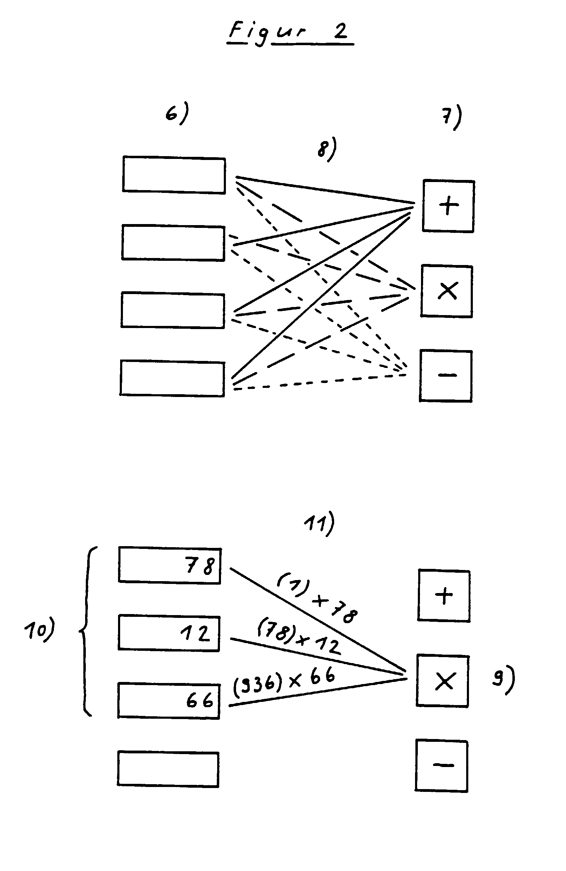

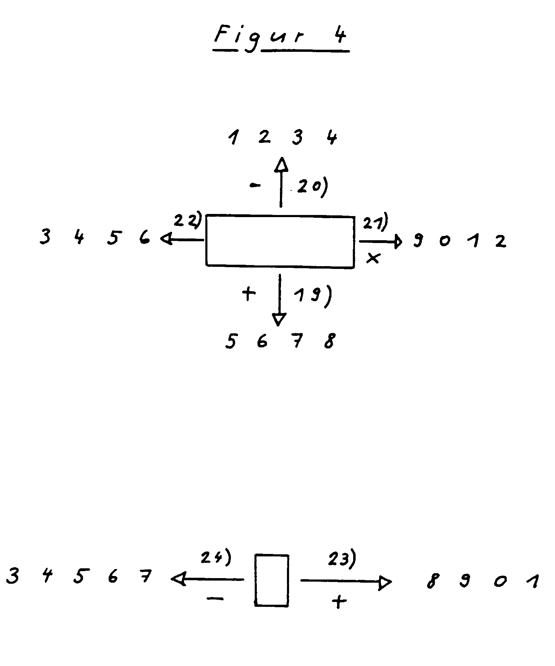

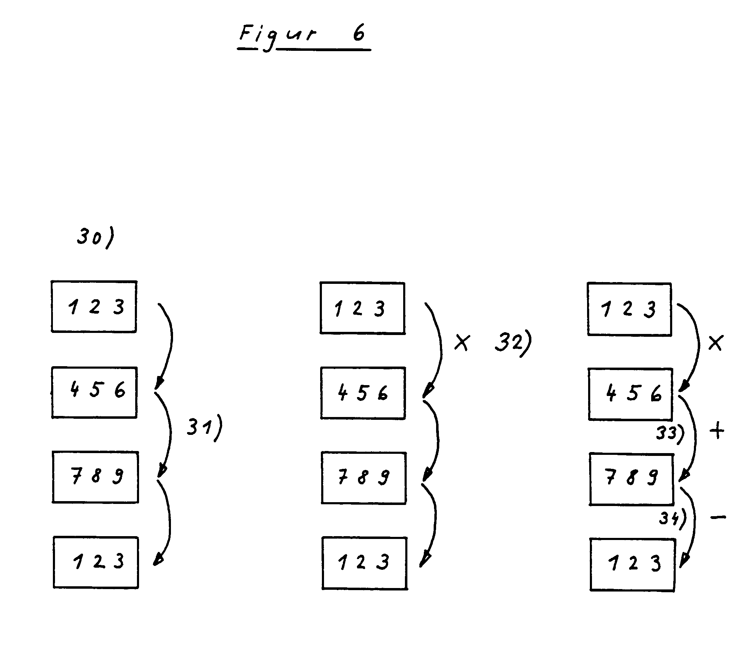

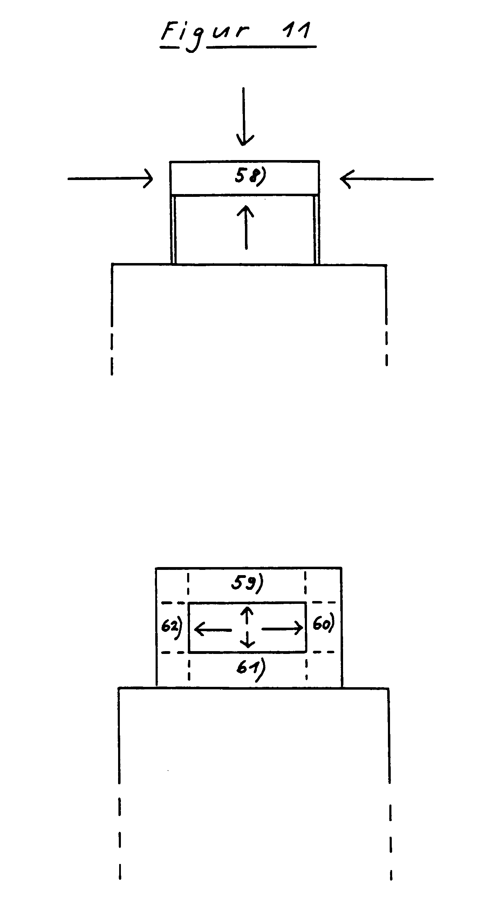

Die Vorteile der automatisierten Abgrenzung der Ziffern zur Zahl sind bei folgenden Verfahren ersichtlich:
- Bei jenen bisherigen Verfahren, bei denen die Ziffern mittels einer separaten Enter-Taste manuell abgegrenzt wurden, wie beispielsweise bei Verfahren mit der umgekehrten polnischen Notation, fällt die separate manuelle Betätigung einer Taste weg.
- Bei der Durchführung arithmetischer Operationen verschiedener Zahlen mit gleicher Operationsart, beispielsweise der Addition einer Zahlenkolonne oder der Multiplikation einer Zahlenreihe, wird bei der Durchführung arithmetischer Operationen gemäss dem Stand der Technik die Operationsart separat jeder Zahl oder jeder Verknüpfung zweier Zahlen zugeordnet. Ein erfinderisches Verfahren besteht nun darin, dass die Zuordnung der Operationsart zur Zahl oder zur Verknüpfung zweier Zahlen automatisiert erfolgt, indem entweder diese Operationsart in einem Speicher oder einer Schaltung zum Rechenwerk gespeichert ist oder wird und mit der automatischen Abgrenzung der Ziffern zur Zahl auch diese gespeicherte Operationsart automatisch der abgegrenzten Zahl oder der Verknüpfung zweier Zahlen über eine Wirkverbindung zugeordnet wird oder indem die abgegrenzten Zahlen zuvor in mindestens einen Speicher (6) abgelegt werden und durch Betätigung einer Taste für eine Operationsart (9) diese Operationsart automatisch jeder gespeicherten Zahl zugeordnet wird (11) (vgl. Figur 2). Dadurch fällt die Betätigung einer Eingabetaste für die Operationsart entweder gar nicht oder höchstens einmal an, wodurch ein Rationalisierungseffekt gleichzeitig nach Typ 2 und 3 erreicht wird, indem der Teilschritt, Abgrenzung der Ziffern zur Zahl, automatisch den Teilschritt, Zuordnung der Operationsart zur Zahl oder zur Verknüpfung, bewirkt (Typ 2) und die Abgrenzung zur Zahl an sich automatisiert vorgenommen wird (Typ 3). Da nun aber nur noch die manuelle Eingabe von Ziffern (Teilschritt 2) zu tätigen ist, kann gleichzeitig ein weiteres Rationalisierungspotential realisiert werden, nämlich indem nun alle Teilschritte 2 gemäss dem Rationalisierungstyp 1 als gleichartige Teilaufgaben nacheinander und zusammengefasst manuell durchgeführt werden können, und somit einer der eingebenden Finger nicht mehr zu einer Operationstaste geführt werden muss, daher die Lage der eingebenden Finger auf der Ziffertastatur ruhiger ist und damit die Konzentration besser auf Teilschritt 1, die visuelle Aufnahme, und Teilschritt 7, die Kontrolle der Ziffern, verteilt werden kann.
- Bei der Durchführung von arithmetischen Operationen mit unterschiedlichen Operationsarten kann mindestens die Zuordnung einer Operationsart automatisiert werden, indem wiederum mindestens eine Operationsart gespeichert wird. Es können dabei nicht nur eine Operationsart sondern auch zwei gespeichert sein und mit der manuellen Eingabe der Operationsart und mit verschiedenen Ausführungsprioritäten kombiniert werden. In einem bevorzugten Verfahren wird bei manueller Betätigung einer Taste für eine Operationsart diese Operationsart mit erster Priorität durchgeführt. Erfolgt keine manuelle Betätigung einer Taste für eine Operationsart, erfolgt mit zweiter Priorität automatisch die Zuordnung einer in einem zusätzlichen Speicher wahlweise gespeicherten Operationsart zur automatisch abgegrenzten Zahl, beispielsweise einer Multiplikation. Ist in diesem Speicher keine Operationsart gespeichert, so erfolgt mit dritter Ausführungspriorität automatisch die Zuordnung der Operationsart Addition, die über eine Schaltung zum Rechenwerk als in ditter Priorität auszuführende Operationsart permanent gespeichert ist. Soll mit erster Priorität eine Operationsart manuell zugeordnet werden, so ist diese vor der Eingabe der ersten Ziffer einzugeben. Dieses Verfahren ist sehr flexibel einsetzbar: Der Grad der Automatisierung kann durch entsprechende Handhabung dem jeweiligen arithmetischen Allgorithmus angepasst werden.
   Im weiteren kann die Zuordnung mindestens einer Operationsart auch automatisiert werden, indem bei automatisierter Eingabe der Ziffern mittels einer Vorrichtung zur Zeichenerkennung die Bewegungsrichtung beim Einlesen der Zahl festgestellt wird (vgl. Figur 11) - was durch mechanische oder elektronische Hilfsmittel möglich ist -, zusätzlich einer Bewegungsrichtung eine bestimmte Operationsart zugeordnet ist und die Feststellung dieser Bewegungsrichtung die automatische Zuordnung der entsprechenden Operationsart zur automatisch abgegrenzten Zahl bewirkt. Beispielsweise können die vier Bewegungsrichtungen nach oben, unten, links und rechts den vier Grundoperationen zugeordnet werden. Die einfachste Anwendung bezieht sich auf die Operationsarten Addition und Subtraktion, indem beispielsweise bei horizontalem Einlesen der Ziffern die Einleserichtung von links nach rechts die Addition (23), von rechts nach links aber die Subtraktion (24) auslöst (vgl. Figur 4). Es ist klar, dass dies eine äusserst einfache aber effiziente Art der Verknüpfung von Zahlen mit Operatoren darstellt, wobei auch Verfahren möglich sind, bei denen diese automatisierte Zuordnung der Operationsart durch die Bewegungsrichtung auch ausschaltbar oder wiederum mit einer Ausführungspiorität zu versehen sind, beispielsweise Ausführung nur, wenn keine Operationsart vor dem Erkennen manuell eingegeben worden ist oder keine in einem zusätzlichen Speicher abgelegt ist.
   Bei der Durchführung von arithmetischen Operationen mit mehreren Speichern kann in einer separaten oder Zusatzfunktion der Bewegungsrichtung auch die Zuführung der erfassten Zahl in einen bestimmten Speicher zugeordnet werden.
- Bei der Durchführung arithmetischer Operationen mit unterschiedlichen Operationsarten und bevorzugterweise bei automatisierter Eingabe der Ziffern mittels einer Vorrichtung zur optischen Zeichenerkennung kann eine Rationalisierung nach Typ 1 erreicht werden, indem zuerst alle Teilschritte 2 und 3, die Eingabe der Ziffern, bzw. die Abgrenzung zur Zahl, automatisiert und für alle zu verarbeitenden Zahlen nacheinander durchgeführt werden, die automatisch abgegrenzten Zahlen in mindestens eine Speicher abgelegt werden (30) und erfindungsgemäss die Reihenfolge der Ablage gespeichert wird (31), sodass die Zuordnung der verschiedenen Operationsarten wiederum nacheinander in der gespeicherten Reihenfolge vorgenommen werden kann, beispielsweise so, dass das erstmalige Eingeben der Operationsart die Zuordnung bzw. die Verknüpfung der ersten Zahl (32), das zweitmalige Eingeben die Zuordnung bzw. die Verknüpfung zur zweiten Zahl (33) bewirkt usw., sodass bei manueller Eingabe ohne Benützung einer zusätzlichen Taste die gespeicherten Zahlen in der Reihenfolge ihrer Speicherung mittels Tastendruck für eine Operationsart abgearbeitet werden (vgl. Figur 6). Es können alle gespeicherten Zahlen oder jeweils nur die aktuell abzuarbeitende Zahl auf einem Bildschirm oder einer Anzeige dargestellt werden. Wichtig ist dabei, dass die Zahlen nicht nur in einem Speicher abgelegt werden, sondern, dass durch die Speicherung der Reihenfolge ihrer Ablage auch die Reihenfolge ihrer Verknüpfung gespeichert ist, und dass das Verfahren auch ohne Bildschirm durchführbar ist.
   Die Verfahren können auch weiter miteinander kombiniert werden.

Ein weiteres erfindungsgemässes Verfahren besteht darin, die bevorzugterweise mittels einer Vorrichtung zur optischen Zeichenerkennung erkannten Zahlen nach ihrer arithmetischen Verarbeitung direkt oder mit Betätigung einer dafür vorgesehenen Taste in eine fest programmierte und fixierte EDV-Weiterverarbeitung einfliessen zu lassen, ohne dass das Ergebnis nochmals manuell eingegeben werden müsste. Bei diesem erfindungsgemässen Verfahren müssen arithmetische Verknüpfungen nicht programmiert sondern können spontan praktiziert werden. Die Idee der automatisierten Erfassung von Zahlen ermöglicht es in dieser Kombination Werte aus Unterlagen frei und automatisch erfassen und dadurch sofort mit ihnen elektronisch rechnen zu können, für das Auswerten bzw. für das Rechnen mit elektronisch erfassten Werten nicht eigens ein Verarbeitungsprogramm vordenken, programmieren und testen zu müssen und ausserdem die einzelnen, erfassten Werte nochmals auf irgend eine Art den Variablen im Programm zuordnen zu müssen, bevor das Berechnungsprogramm in Tätigkeit treten kann, sondern den im Kopf vorhandenen Rechenalgorithmus durch entsprechende Reihenfolge beim Führen der Vorrichtung zur Zeichenerkennung über das vorliegende Zahlenmaterial schrittweise automatisiert bis zum Ergebnis auszuführen.
Es ist klar, dass wahlweise die Operationsart auch bei diesem Verfahren durch die Art der Bewegungsrichtung ausgelöst werden kann. Das Resultat kann angezeigt werden und entweder sofort oder nach händischer weiterer Bearbeitung direkt in die fest programmierte EDV-Weiterverarbeitung weitergegeben werden.
Diese Art der Kombination zwischen fester Programmierung und vorgeschalteter arithmetischer freier Verarbeitung im Sinne einer Rechenmaschine, mit einmaliger und automatisierter Erfassung der Zahlen, vermindert nicht nur den Aufwand im Zusammenhang mit der Erfassung und Verarbeitung der Zahlen sondern erhöht auch die Flexibilität zwischen arithmetischer Verarbeitung von Zahlen mittels fester Programmierung und freier Verarbeitung im Sinne einer elektronischen Rechenmaschine. Ein Gerät zur Durchführung eines solchen Verfahrens kann beispielsweise an einen Personal Computer angeschlossen aber auch als selbständige Vorrichtung verwendet werden.

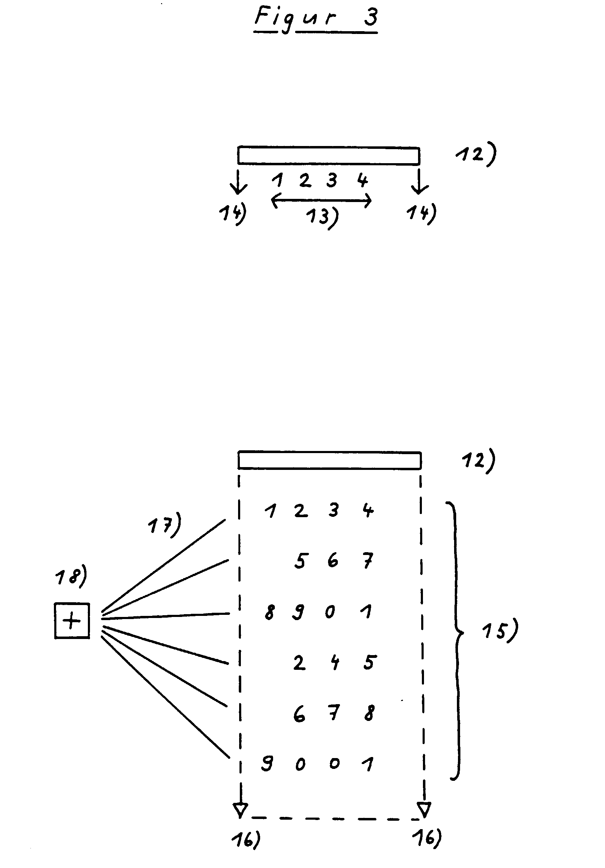

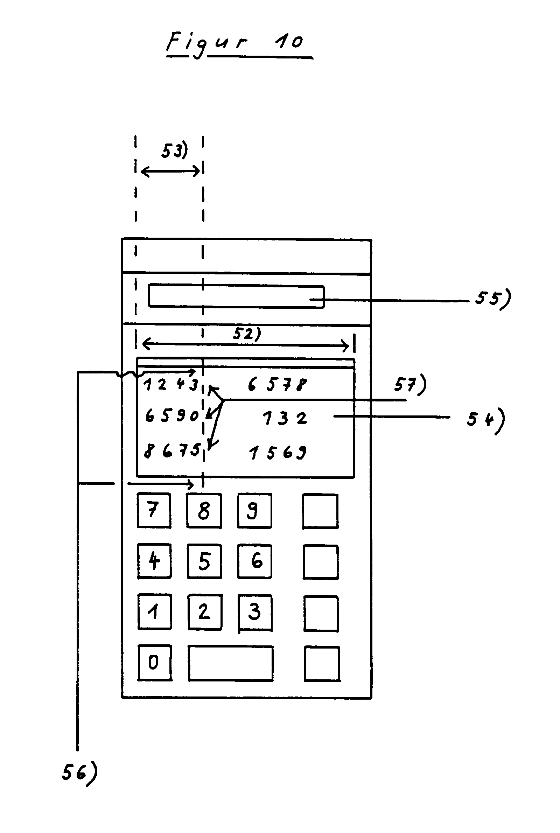

Mit einem weiteren Verfahren werden einzelne Zahlen mit einer Vorrichtung zur optischen Zeichenerkennung erfasst, deren Lesebereich mindestens die Grösse einer arithmetisch zu verarbeitenden Zahl in waagrechter Richtung (13) aufweist, mit der die zu erfassenden Ziffern einer Zahl für die Durchführung arithmetischer Operationen nicht horizontal sondern vertikal (14) erfasst werden. Durch vertikale Erfassung kann der Erfassungsweg gegenüber der horizontalen Erfassung auf die Höhe der Zahlen verkürzt werden. Die Abgrenzung der Ziffern zu Zahlen erfolgt wiederum automatisch (vgl. Figur 3).
Hervorragend eignet sich dieses Verfahren zur Addition einer schriftlich vorliegenden Zahlenkolonne nach einem der erfindungsgemässen Verfahren zur Durchführung arithmetischer Operationen mit gleichartigen Operationsarten: Die Zahlenkolonne (15) wird durch den waagrecht ausgerichteten Lesebereich beispielsweise in einer Bewegung von oben nach unten erfasst (16) und die Ziffern werden erkannt und automatisch abgegrenzt, mit der automatischen Abgrenzung die Operationsart Addition (18) den abgegrenzten Zahlen nach einem erfindungsgemässen Verfahren zur Durchführung gleichartiger arithmetischer Operationen automatisch zugeordnet und die Zahlen miteinander verknüpft (17).
Wird eine Nachaddition ausgeführt, so kann das Ergebnis ebenfalls automatisiert eingelesen werden, dieses entweder durch Betätigung einer Taste oder durch Erkennen eines Striches in der Zahlenkolonne als Ergebnis bezeichnet werden, worauf die Addition der Zahlen automatisch auf Uebereinstimmung mit dem erkannten Ergebnis überprüft wird und bei Nichtübereinstimmung allenfalls ein Warnsignal erzeugt wird.
Der Erfassungsweg, der sich bei diesem Verfahren auf die Höhe einer Zahlenkolonne (15) beschränkt, ist beträchtlich reduziert gegenüber einem Verfahren, bei dem jede einzelne Zahl mit einer horizontalen Erfassungsbewegung erfasst werden muss. Während im letzteren Fall mit der Vorrichtung zur optischen Zeichenerkennung auch gewährleistet sein muss, dass jede Zahl und nur diese richtig erfasst wird, was entweder eine hohe Konzentration bei jeder einzelnen Zahl oder zusätzliche technische Hilfsmittel erfordert, beschränkt sich bei dem beschriebenen erfindungsgemässen Verfahren die richtige Erfassung auf die Zahlenkolonne als Ganzes, was mit dem horizontal angeordneten Lesebereich (12) einer Vorrichtung zur optischen Zeichenerkennung auf äusserst einfache Art und Weise erreicht werden kann. Die visuelle Konzentration beschränkt sich auf die Zahlenkolonne und nicht mehr auf jede einzelne Zahl (vgl. Figur 3).
Eine erste erfindungsgemässe Ausführung einer Vorrichtung zur Durchführung eines solchen Verfahrens besteht aus einem Lesebereich (52) mindestens in der Breite einer Zahlenkolonne, in einer Ausführungsform beschränkt auf eine Standardgrösse, die es erlaubt, praktisch alle schriftlich vorliegenden Zahlenkolonnen zu erfassen, einer diesen Lesebereich enthaltenden Vorrichtung zur Zeichenerkennung, einem Rechenwerk zur Durchführung verschiedener arithmetischer Operationen im Sinne und mit der Funktion einer elektronischen Rechenmaschine, einer Einrichtung zur automatischen Abgrenzung von Ziffern zu Zahlen, einer Anzeige (55) zur Darstellung des Ergebnisses oder zusätzlich der Zahlen und Operatoren sowie allenfalls einer Tastatur zur manuellen Eingabe von Operationsarten und Zahlen, wobei nicht notwendigerweise alle Funktionen in einem Gerät integriert sein müssen.
Beispielsweise können alle Funktionen ausser die Vorrichtung zur Zeichenerkennung integriert sein. Letztere kann mittels eines Kabels mit der Vorrichtung, welche die übrigen Funktionen wahrnimmt, verbunden sein. Oder es kann die in der Vorrichtung zur Zeichenerkennung enthaltene Zeichenerkennungssoftware beispielsweise in einen separaten Computer ausgelagert aber mit einem Kabel verbunden sein, während die übrigen Funktionen integriert sind.
Ist die Vorrichtung zur Zeichenerkennung im Gerät integriert, kann bei einer erfindungsgemässen Vorrichtung der Lesebereich an einem Durchblick (54) angebracht sein, durch den die zu erfassenden Zahlen einer Zahlenkolonne ersichtlich sind (vgl. Figur 10). Der beschriebene Lesebereich mindestens in der Breite einer Zahlenkolonne kann aber auch so an einer Vorrichtung angeordnet sein, dass mit ihm auch Zahlen horizontal gelesen werden können.

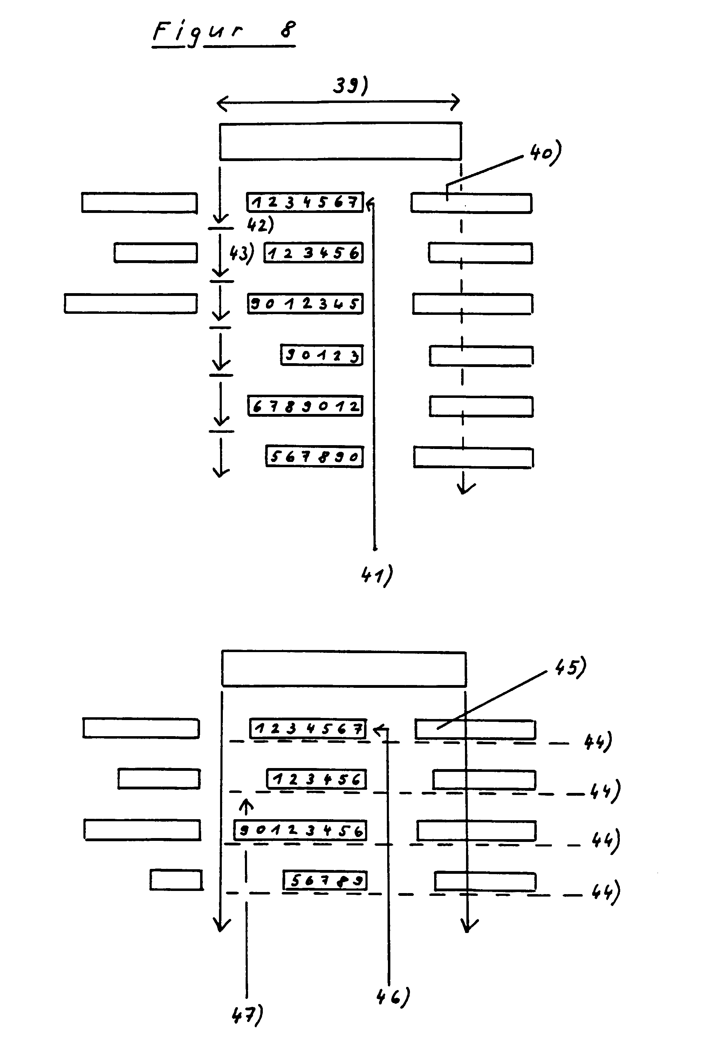

Eine Vorrichtung mit fester Grösse des Lesebereiches kann insofern zu Problemen führen, als damit sowohl bei vertikaler wie auch bei horizontaler Erfassung von Zahlen auch mindestens teilweise Ziffern einer nicht arithmetisch zu verknüpfenden Zahl überstrichen werden und diese mit den erfindungsgemässen Verfahren automatisch ebenfalls zu einer Zahl abgegrenzt und verarbeitet würden.
Ein erfindungsgemässes Verfahren verwendet einen Scanner, bei dem der Lesebereich mechanisch, beispielsweise durch einen Schieber, oder auch durch elektronische Hilfsmittel der notwendigen Grösse so angepasst werden kann, dass keine nicht zu verarbeitenden Zahlen miterfasst werden (53). Die aktuelle Grösse des Scannerbereiches kann entweder am Gehäuse der Vorrichtung zur Durchführung der arithmetischen Operationen oder an der Vorrichtung zur Zeichenerkennung, beim Lesebereich selbst, so angezeigt werden, dass damit die visuelle Verbindung zwischen aktuellem Lesebereich und den zu erfassenden Zahlen hergestellt wird und diese Anzeige auch eine Wirkverbindung mit dem Lesebereich aufweisen kann (56) (vgl. Figur 10).
Wird kein in der Grösse anpassbarer Lesebereich verwendet, kann die arithmetische Verarbeitung nicht zu verarbeitender Zahlen verhindert werden, indem die Abgrenzung (41) der Ziffern einer Zahl zu dieser Zahl automatisch einen Unterbruch in einem beliebigen Moment des Erkennungsprozesses auslöst und zwar so, dass keine weitere Zahl mehr arithmetisch verarbeitet wird. Nach mechanischer oder elektronischer Feststellung eines Unterbruches in der Erfassungsbewegung (42) oder des durch letztere ausgelösten Zeichenerkennungsprozesses wird der Unterbruch in der arithmetischen Verarbeitung von Zahlen wieder aufgehoben, wodurch eine neue Zahl wieder verarbeitet werden kann (43) usw. Bei einem bevorzugten Verfahren wird jedoch im Rahmen der Zeichenerkennung eine Zeilenfindung vorgenommen (44), wobei ein Unterbruch in der arithmetischen Verarbeitung, verursacht durch die erste Abgrenzung von Ziffern zur Zahl (46), nur für diese Zeile Gültigkeit hat und sobald eine neue Zeile gefunden ist (47), eine erste abgegrenzte Zahl wieder arithmetisch verarbeitet wird. Dieses Verfahren gilt bei vertikaler Erfassung von Zahlen, bei der sich auf einer Zeile auch Ziffern einer nicht zu erfassenden Zahl befinden (vgl. Figur 8).
Bei horizontal zu erfassenden Zahlen besteht ein Problem, wenn nicht nur die Zahlen einer Reihe, sondern auch nicht zu verarbeitende Zahlen einer zweiten Reihe miterfasst werden. Auch hier kann eine Zeilenfindung vorgenommen werden, wobei der Unterbruch in der arithmetischen Verarbeitung erfolgt, sobald eine zweite Zeile erkannt wird.
Der Vorteil dieser Verfahren ist, dass auch mit grösseren Lesebereichen nur die relevanten Zahlen eingelesen werden und dies für den Anwender auf einfache Art und Weise. Er muss den Lesebereich nur so führen, dass die Beschränkung des Lesebereiches auf einer Seite zur richtigen Auswahl der Zahlen verwendet wird, während der Rest automatisch durchgeführt wird.
Im weiteren kann die Feststellung der vertikalen Erfassungsbewegung den Unterbruch der arithmetischen Verarbeitung der ersten Zahl jeder gefunden Zeile auslösen oder die Feststellung der horizontalen Erfassungsbewegung den Unterbruch der arithmetischen Verarbeitung nach der letzten erkannten Zahl der ersten Zeile auslösen.
Ein Unterbruch in der Bewegung des Lesebereiches, der den Unterbruch in der arithmetischen Verarbeitung wieder aufhebt, kann auf elektronische Art und Weise beispielsweise dadurch festgestellt werden, dass keine Ziffern mehr aus digital kodierten Zeichen innerhalb eines definierten Zeitintervalles erkannt werden.
Analog der Zeilenfindung kann auch bei der Verarbeitung einer Zahlenkolonne eine Spaltenfindung vorgenommen werden, wobei dann die Zahlen einer Spalte arithmetisch zu verarbeiten sind.

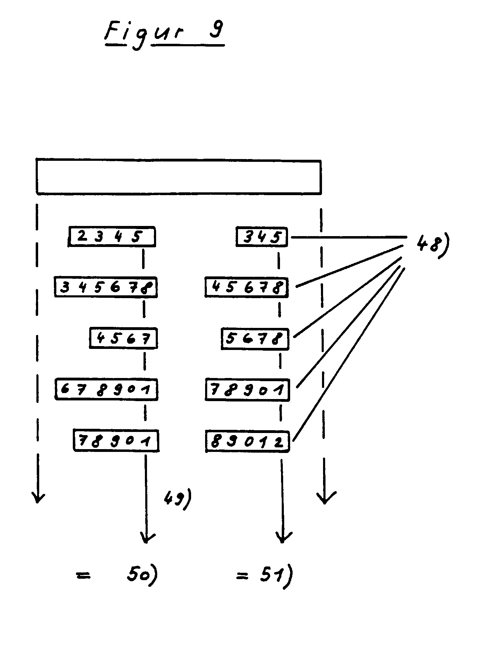

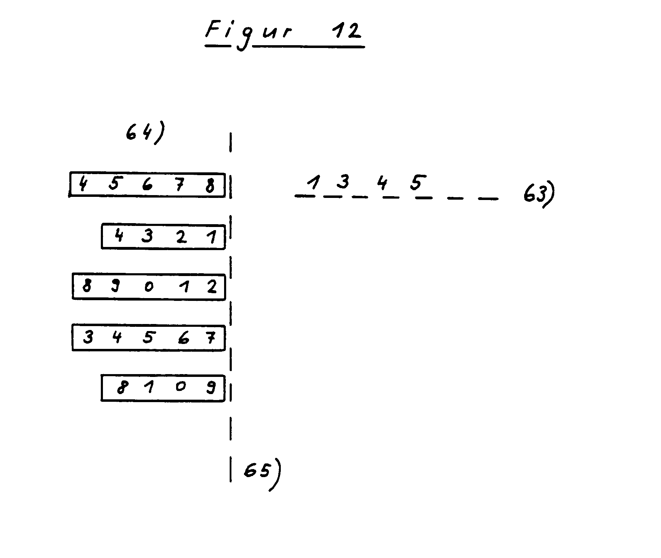

In einem weiteren erfindungsgemässen Verfahren zur Bestimmung der für eine Durchführung arithmetischer Operationen relevanten Zahlen bei zu grossem Lesebereich werden Ziffern aller Zahlen, auch solcher, die nicht zu verarbeiten sind, in einem ersten Schritt zu Zahlen abgegrenzt. Sind die Zahlen auf der schriftlichen Vorlage geordnet aufgeführt, beispielsweise in zwei Kolonnen, welche beide von dem Lesebereich erfasst werden, wird in einem zweiten Schritt mittels einer Taste die Verknüpfungsrichtung eingegeben (49). Die Verknüpfungsrichtung legt fest, in welcher Richtung die erkannten Zahlen zu verknüpfen sind, beispielsweise sollen die erkannten Zahlen einer Zahlenkolonne nicht horizontal sondern vertikal miteinander verknüpft werden, sodass die Taste vertikal einzugeben ist. Die Operationsart kann nun nach beschriebenen Verfahren für die Durchführung arithmetischer Operationen gleicher Operationsart oder mit mindestens einer automatisierten Zuordnung einer Operationsart oder mit unterschiedlichen Operationsarten diesen Zahlen zugeordnet werden. Bei Durchführung einer Addition kann durch einmalige Betätigung der Operationsart Addition diese allen Zahlen beider Kolonnen zugeordnet werden, wobei durch erstmalige Betätigung der Ergebnistaste das Resultat der ersten Kolonne (50), durch zweitmaliges Betätigen das Resultat der zweiten Kolonne (51) angezeigt werden kann. Werden Zahlen auf einem Bildschirm dargestellt, können auch die Resultate beider Kolonnen auf dem Bildschirm automatisch angezeigt werden (vgl. Figur 9)
Es ist allerdings zu beachten, dass bei all diesen Verfahren zur Bestimmung der relevanten Zahlen kein Bildschirm notwendig ist, was nicht nur ein Kostenvorteil sein kann, sondern diese Verfahren sehr vielseitig einsetzbar macht. Natürlich können die abgegrenzten Zahlen sowie die Ergebnisse beispielsweise auf einem Bildschirm eines Personal Computers dargestellt werden und kann allenfalls die Art der Verknüpfung ersichtlich gemacht werden.
Wiederum kann allenfalls die Verknüpfungsrichtung auch durch die Art der festgestellten Bewegungsrichtung ausgelöst werden oder es kann diese gleichzeitig auch noch die Operationsart bestimmen. Diverse Kombinationen sind denkbar. Auch kann beispielsweise die Eingabe der Operationsart Addition automatisch die Verknüpfung vertikal, die Eingabe der Operationsart Multiplikation die Verknüpfungsrichtung horizonal bewirken.
Im weiteren kann im oben erwähnten Beispiel, bei dem Zahlen zweier Kolonnen erkannt und mit der Verknüpfungsrichtung vertikal addiert wurden, durch eine zweite Betätigung einer Taste für die Verknüpfungsrichtung, diesmal jedoch für horizontale Verknüpfung, die horizontale, als Beispiel dargestellte Addition erfindungsgemäss ausgelöst werden, wiederum mit oder ohne Bildschirm.
Eine Verknüpfungsrichtung wird nicht hergestellt, indem jede einzelne Zahl einzeln verknüpft wird, sondern indem eine erkannte Zahlenmenge entweder vertikal oder horizontal in relevante Teilmengen unterteilt wird.
Vorausetzung dazu ist allerdings, dass die Zahlen in dieser Weise geordnet vorliegen: es muss in horizonaler Richtung eine Zuordnung, beispielsweise eine Zeilenfindung, und in vertikaler Richtung eine Zuordnung, beispielsweise eine Kolonnenfindung, innerhalb gewisser zulässiger Schwankungen möglich sein. Die Kolonnen- oder Spaltenfindung kann ähnlich der im Rahmen einer Zeichenerkennung vorgenommenen Zeilenfindung durchgeführt werden. Die zu einer Zahl abgegrenzten Ziffern werden beispielsweise als Zifferanordnungen (64) wie in Figur 12 dargestellt betrachtet. Ähnlich wie bei der Zeilenfindung wird nun für diese Zifferanordnungen eine gemeinsame Linie, nicht eine horizontale wie bei der Zeilenfindung (63) sondern nun eine vertikale Linie bei der rechten Begrenzung der Zahl gesucht. Alle zugehörigen Zahlen werden miteinander verknüpft und Zahl und Verknüpfung gespeichert. diese

In einer Vorrichtung zur Durchführung der erfindungsgemässen Verfahren kann die automatische Abgrenzung mit der manuellen Abgrenzung kombiniert sein. Dadurch ergeben sich drei Betriebsarten:
Vollautomatische Betriebsart, bei der Ziffern automatisiert eingegeben werden und automatisch zur Zahl abgegrenzt werden; halbautomatische Betriebsart, bei der Ziffern manuell eingegeben werden aber automatisch zur Zahl abgegrenzt werden; konventionelle Betriebsart, bei der Ziffern manuell eingegeben werden und manuell zur Zahl abgegrenzt werden.

Die Kontrolle der Richtigkeit der eingelesenen Zahlen kann erleichtert werden, wenn eine Ziffer gekennzeichnet wird, bei der die Erkennungssicherheit eine definierte Grenze unterschreitet. Die Korrektur kann durch manuelle Eingabe vorgenommen werden, wobei die Korrektureingabe automatisch zu dieser Ziffer mit tiefer Erkennungssicherheit oder zur betreffenden Zahl zurückversetzt werden kann und auf diese Art und Weise all diese Ziffern mit tiefer Erkennungssicherheit zur Korrektur abgearbeitet werden können.
Im weiteren ist es auch möglich, die Kontrolle zu vereinfachen, indem nicht nur die erkannten Zahlen auf einer Anzeige oder einem Bildschirm dargestellt werden, sondern auch ihre digital oder analog kodierte Darstellung. Dadurch kann das digital oder analoge Bild der Zahl, allenfalls vergrössert, mit der erkannten Zahl auf dem Bildschirm verglichen werden.

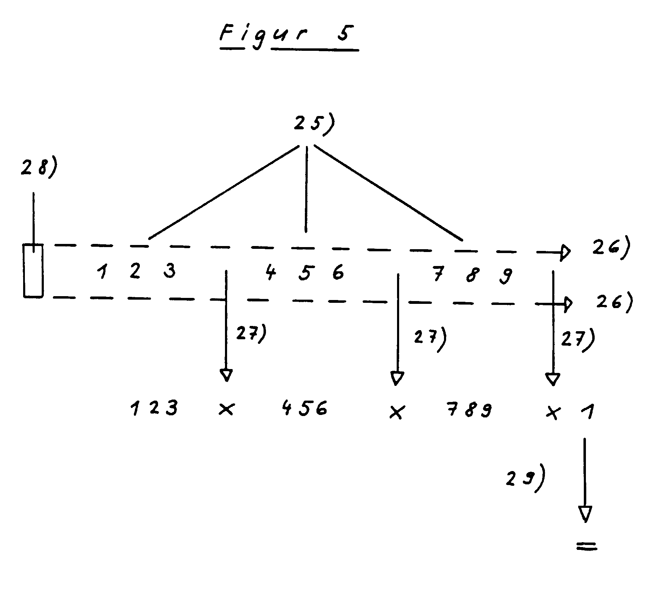

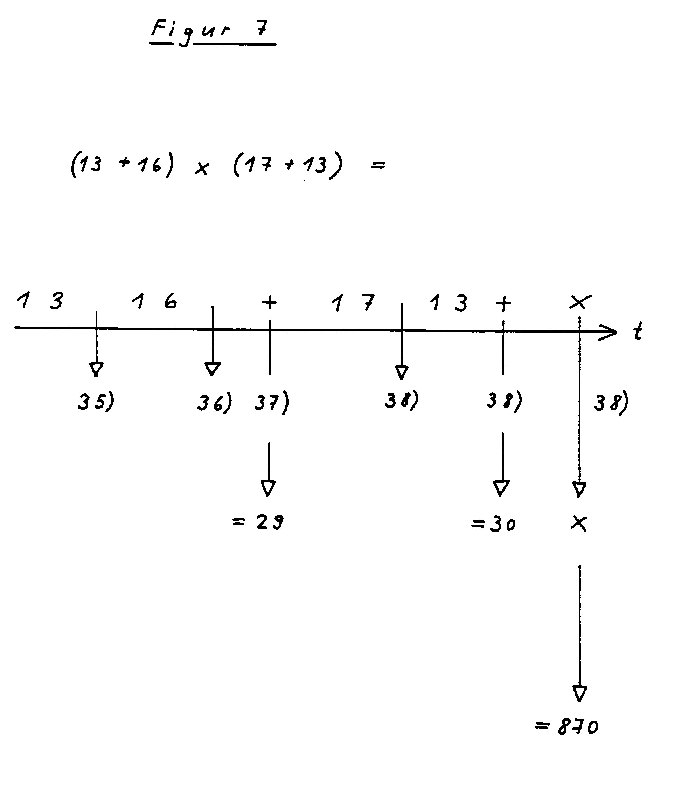

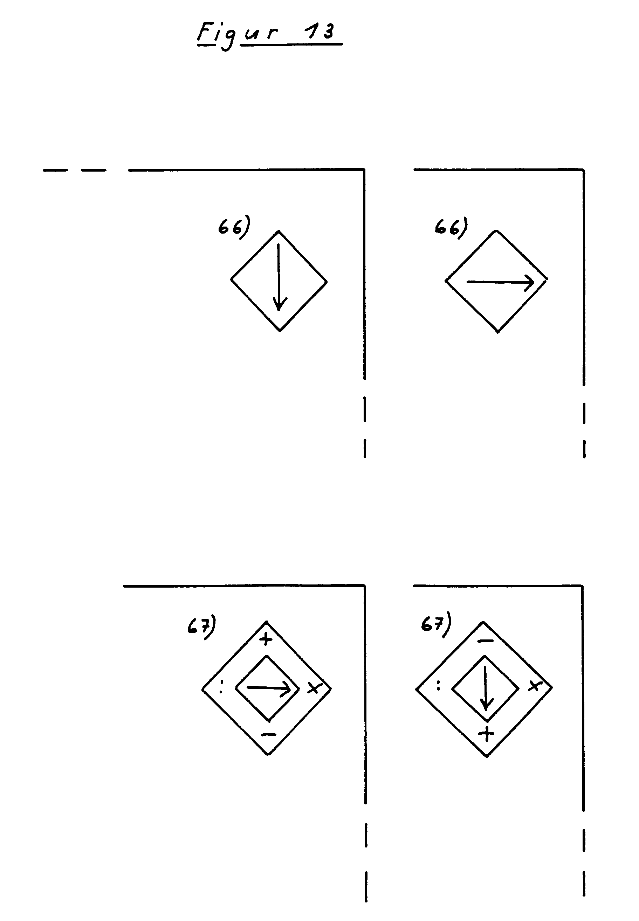

Bei den beschriebenen und in den Figuren 1 bis 13 dargestellten Verfahren und Vorrichtungen handelt es sich um erste Ausführungen der erfindungsgemässen Patentansprüche.

## Patentansprüche

1. Verfahren zum Bearbeiten einer Zahlenkolonne, die mindestens zwei untereinander angeordnete, aus Ziffern gebildete Zahlen umfasst, mittels arithmetischer Operationen, wobei die Ziffern mittels einer optischen Zeichenerkennungsvorrichtung erfasst werden und eine Zahlenabgrenzung zwischen jeweils zwei nacheinander erfassten Zahlen durchgeführt wird, und wobei bestimmte arithmetische Operationen gewählt und den Zahlen automatisiert zugeordnet werden,
**dadurch gekennzeichnet**,
dass die Zahlen während einer ununterbrochenen Bewegung (16) der optischen Zeichenerkennungsvorrichtung (12) längs der Zahlenkolonne (15) erfasst werden, wobei alle Ziffern einer Zahl gleichzeitig erfasst werden, und die Zahlenabgrenzung zwischen jeweils zwei benachbarten Zahlen der Zahlenkolonne (15) durch elektronische Mittel zur Zeichenabgrenzung erfolgt.

2. Verfahren nach Patentanspruch 1,
**dadurch gekennzeichnet**,
dass arithmetrische Operationen (18) einer Art durchgeführt werden. (Fig. 3).

3. Verfahren nach Patentanspruch 1,
**dadurch gekennzeichnet**,
dass arithmetische Operationen mehrerer Arten durchgeführt werden. (Fig. 6).

4. Verfahren nach Patentanspruch 2,
**dadurch gekennzeichnet**,
dass die Art der Operation vor dem Beginn der Erfassung der ersten Zahl gewählt und gespeichert wird. (Fig. 3).

5. Verfahren nach Patentanspruch 3,
**dadurch gekennzeichnet**,
dass die Art der Operation nach der Erfassung jeder Zahl gewählt wird. (Fig. 6).

6. Verfahren nach Patentanspruch 2 oder 3,
**dadurch gekennzeichnet**,
dass die Art der Operation nach dem Ende der Erfassung der letzten Zahl gewählt wird.

7. Verfahren nach Patentanspruch 1,
**dadurch gekennzeichnet**,
dass die Zuordnung der Operation zu den erfassten Zahlen jeweils nach einer Zahlenabgrenzung erfolgt.

8. Verfahren nach Patentanspruch 1,
**dadurch gekennzeichnet**,
dass die Zuordnung der Operation zu den erfassten Zahlen nach der Erfassung der letzten Zahl erfolgt.

9. Verfahren nach Patentanspruch 1,
**dadurch gekennzeichnet**,
dass die Zuordnung der Operation durch die Richtung der Bewegung der optischen Zeichenerkennungsvorrichtung längs der Zahlenkolonne bei der Zahlenabgrenzung erfolgt, wobei die eine Richtung einer bestimmten Operation und die andere Richtung der dazu inversen Operation entspricht. (Fig. 11).

10. Verfahren nach Patentanspruch 9,
**dadurch gekennzeichnet**,
dass die bestimmte Operation eine Addition ist.

11. Vorrichtung zum Bearbeiten einer Zahlenkolonne, die mindestens zwei untereinander angeordnete, aus Ziffern gebildete Zahlen umfasst und auf einem Datenträger angeordnet ist, mittels arithmetischer Operationen, aufweisend
- eine Recheneinheit,
- eine optische Zeichenerkennungsvorrichtung,
- ein Mittel zur gegenseitigen Zahlenabgrenzung von jeweils zwei benachbarten Zahlen,
- eine Einrichtung zur Wahl von arithmetischen Operationen und zur Zuordnung dieser Operationen zu den erfassten Zahlen,
**dadurch gekennzeichnet**,
- dass die optische Zeichenerkennungsvorrichtung einen Lesebereich aufweist, dessen Breite mindestens der Breite der zu bearbeitenden Zahlen quer zur Richtung der Zahlenkolonne (15) entspricht, zum gleichzeitigen Erfassen aller Ziffern einer Zahl und zum Erfassen der Zahlen durch eine geradlinige, ununterbrochen durchführbare Bewegung des Lesebereichs längs der Zahlenkolonne, und
- dass die Mittel zur Zahlenabgrenzung elektronische Mittel zur automatisierten Zeichenabgrenzung schriftlich vorliegender Zeichen entlang der Richtung der Zahlenkolonne sind.

12. Vorrichtung nach Patentanspruch 11,
**dadurch gekennzeichnet**,
dass die Einrichtung zur Wahl der arithmetischen Operationen so ausgebildet ist, dass pro bearbeitete Zahlenkolonne eine Art von Operationen wählbar ist. (Fig. 2).

13. Vorrichtung nach Patentanspruch 11,
**dadurch gekennzeichnet**,
dass die Einrichtung zur Wahl der arithmetischen Operationen so ausgebildet ist, dass pro bearbeitete Zahlenkolonne mehrere Arten von Operationen wählbar sind. (Fig. 6).

14. Vorrichtung nach Patentanspruch 11,
**dadurch gekennzeichnet**,
dass die Einrichtung zur Wahl der arithmetischen Operationen vor dem Beginn der Erfassung der Zahlen betätigbar ist. (Fig. 3).

15. Vorrichtung nach Patentanspruch 11,
**dadurch gekennzeichnet**,
dass die Einrichtung zur Wahl der arithmetischen Operationen nach dem Erfassen jeder Zahl betätigbar ist. (Fig. 6).

16. Vorrichtung nach Patentanspruch 11,
**dadurch gekennzeichnet**,
dass die Einrichtung zur Wahl der arithmetischen Operationenen nach dem Ende der Erfassung aller Zahlen betätigbar ist.

17. Vorrichtung nach Patentanspruch 11,
**dadurch gekennzeichnet**,
dass die Einrichtung zur Zuordnung einer Operation zu einer erfassten Zahl nach der Erfassung jeder einzelnen Zahl aktivierbar ist.

18. Vorrichtung nach Patentanspruch 11,
**dadurch gekennzeichnet**,
dass die Einrichtung zur Zuordnung einer Operation zu einer erfassten Zahl nach der Erfassung der letzten Zahl aktivierbar ist.

19. Vorrichtung nach Patentanspruch 11,
**dadurch gekennzeichnet**,
dass die Einrichtung zur Wahl einer bestimmten Operation mit einer Einrichtung zur Erkennung und Auswertung der Bewegungsrichtung der Einrichtung zur optischen Zeichenerkennung längs der Zahlenkolonne gekoppelt ist, um mit der einen Bewegungsrichtung eine erste Operation und mit der entgegengesetzten Bewegungsrichtung die dazu inverse Operation zu wählen. (Fig. 11).

20. Vorrichtung nach Patentanspruch 19,
**dadurch gekennzeichnet**,
dass die erste Operation eine Addition ist.

## Claims

1. Method of processing a numerical column, which comprises at least two stacked numbers composed of figures, by means of arithmetical operations in which the figures are detected by means of an optical character recognition tool and a number demarcation is carried out between two respective successively detected numbers, and specified arithmetical operations are selected and automatically associated with the numbers, **characterised in that** the numbers are detected during a continuous movement (16) of the optical character recognition tool (12) along the numerical column (15), and all figures of one number are simultaneously detected, and the number demarcation is carried out between two respectively adjacent numbers of the numerical column (15) by electronic means of character demarcation.

2. Method according to Patent Claim 1, **characterised in that** arithmetical operations (18) of one type are carried out (Fig. 3).

3. Method according to Patent Claim 1, **characterised in that** arithmetical oparations of several types are carried out (Fig. 6).

4. Method according to Patent Claim 2, characterised in that the type of operation is chosen prior to detection of the first number and stored (Fig. 3).

5. Method according to Patent Claim 3, **characterised in that** the type of operation is chosen after detection of each number (Fig. 6).

6. Method according to Patent Claim 2 or 3, **characterised in that** the type of operation is chosen following the end of detection of the last number.

7. Method according to Patent Claim 1, **characterised in that** the association of an operation with detected numbers is carried out after a number demarcation.

8. Method according to Patent Claim 1, **characterised in that** the association of the operation with detected numbers is carried out after detection of the last number.

9. Method according to Patent Claim 1, **characterised in that** the association of the operation is carried out by the direction of movement of the optical character recognition tool along the numerical column during the number demarcation, and that the one direction corresponds with a specified operation, and the other direction corresponds with a thereto inverse operation.

10. Method according to Patent Claim 9, **characterised in that** the specified operation is an addition.

11. Device for processing a numerical column, which comprises at least two stacked numbers composed of figures and is arranged on a data carrier, by means of arithmetical operations, comprising
- a computer unit;
- an optical character recognition tool;
- a means for mutual number demarcation of two respective adjacent numbers;
- a device for selection of arithmetical operations and for associating these operations with detected numbers,
**characterised in that**
- the optical character recognition tool has a reading area the width of which corresponds at least with the width of numbers to be processed transversely to the alignment of the numerical column (15) for simultaneous detection of all figures of a number and for detection of the numbers by a straight and uninterruptedly performed movement of the reading area along the numerical column; and
- the means for number demarcation are electronic means for automated character demarcation of written characters along the alignment of the numerical column.

12. Device according to Patent Claim 11, **characterised in that** the device for selection of the arithmetical operations is designed in such a manner that one type of operation can be selected for each processed numerical column (Fig. 2).

13. Device according to Patent Claim 11, **characterised in that** the device for selection of the arithmetical operations is designed in such a manner that several types of operation can be selected for each processed numerical column (Fig. 6).

14. Device according to Patent Claim 11, **characterised in that** the device for selection of the arithmetical operations is operable prior to a start of number detection (Fig. 3).

15. Device according to Patent Claim 11, **characterised in that** the device for selection of arithmetical operations is operable after detection of each number (Fig./ 6).

16. Device according to Patent Claim 11, **characterised in that** the device for selection of arithmetical operations is operable after the end of detection of all numbers.

17. Device according to Patent Claim 11, **characterised in that** the device for associating an operation with a detected number activatable after detection of each individual number.

18. Device according to Patent Claim 11, **characterised in that** the device for associating an operation to a detected number is activatable after detection of the last number.

19. Device according to Patent Claim 11, **characterised in that** the device for selection of a specified operation with a device for recognition and evaluation of the movement direction of the device for optical character reading is coupled along the numerical column in order to select with the one movement direction a first operation and with the opposite movement direction a thereto inverse operation (Fig. 11).

20. Device according to Patent Claim 19, **characterised in that** the first operation is an addition.

## Revendications

1. Procédé de traitement d'une colonne de nombres, comportant au moins deux nombres formés de chiffres et disposés l'un au-dessous de l'autre, au moyen d'opérations arithmétiques, les chiffres étant enregistrés au moyen d'un dispositif de reconnaissance optique de signes et une délimitation entre nombres étant exécutée entre chaque fois deux nombres enregistrés l'un à la suite de l'autre, tandis que des opérations arithmétiques déterminées sont choisies et sont associées aux nombres d'une manière automatisée,
caractérisé
en ce que les nombres sont enregistrés au cours d'un déplacement ininterrompu (16) du dispositif de reconnaissance optique de signes (12) le long de la colonne de nombres (15), tous les chiffres d'un nombre étant enregistrés simultanément et la délimitation entre nombres ayant lieu entre chaque fois deux nombres voisins de la colonne de nombres (15) à l'aide de moyens électroniques de délimitation entre signes.

2. Procédé selon la revendication 1, caractérisé en ce que des opérations arithmétiques (18) d'un type sont exécutées. (Fig. 3).

3. Procédé selon la revendication 1, caractérisé en ce que des opérations arithmétiques de plusieurs types sont exécutées. (Fig. 6).

4. Procédé selon la revendication 2, caractérisé en ce que le type de l'opération est choisi et mis en mémoire avant le début de l'enregistrement du premier nombre. (Fig. 3).

5. Procédé selon la revendication 3, caractérisé en ce que le type de l'opération est choisi après l'enregistrement de chaque nombre. (Fig. 6).

6. Procédé selon la revendication 2 ou 3, caractérisé en ce que le type de l'opération est choisi après la fin de l'enregistrement du dernier nombre.

7. Procédé selon la revendication 1, caractérisé en ce que l'association de l'opération aux nombres détectés a lieu chaque fois après une limitation de nombres.

8. Procédé selon la revendication 1, caractérisé en ce que l'association de l'opération aux nombres enregistrés a lieu après l'enregistrement du dernier nombre.

9. Procédé selon la revendication 1, caractérisé en ce que l'association de l'opération a lieu au moyen du sens du déplacement du dispositif de reconnaissance optique de signes le long de la colonne de nombres lors de la délimitation entre nombres, le premier sens correspondant à une opération déterminée et l'autre sens à l'opération inverse de cette dernière. (Fig. 11).

10. Procédé selon la revendication 9, caractérisé en ce que l'opération déterminée est une addition.

11. Dispositif de traitement d'une colonne de nombres, qui comporte au moins deux nombres formés de chiffres et disposés l'un au-dessous de l'autre et qui est située sur un support de données, au moyen d'opérations arithmétiques, comprenant
- une unité de calcul,
- un dispositif de reconnaissance optique de signes,
- un moyen permettant la délimitation mutuelle entre nombres de chaque fois deux nombres voisins,
- un dispositif de choix d'opérations arithmétiques et d'association de ces opérations aux nombres enregistrés, caractérisé
- en ce que le dispositif de reconnaissance optique de signes comprend une zone de lecture dont la largeur est au moins égale à la largeur des nombres à traiter, transversalement à la direction de la colonne de nombres (15), et qui sert à enregistrer simultanément tous les chiffres d'un nombre et à enregistrer les nombres au moyen d'un déplacement rectiligne de la zone de lecture le long de la colonne de nombres qui peut être exécuté d'une manière ininterrompue et
- en ce que les moyens de délimitation entre nombres sont des moyens électroniques de délimitation automatisée de signes, se présentant par écrit, le long de la direction de la colonne de nombres.

12. Dispositif selon la revendication 11, caractérisé en ce que le dispositif de choix des opérations arithmétiques est agencé de façon qu'un type d'opérations puisse être choisi par colonne de nombres traitée. (Fig. 2).

13. Dispositif selon la revendication 11, caractérisé en ce que le dispositif de choix des opérations arithmétiques est agencé de façon que plusieurs types d'opérations puissent être choisis par colonne de nombres traitée. (Fig. 6).

14. Dispositif selon la revendication 11, caractérisé en ce que le dispositif de choix des opérations arithmétiques est agencé de façon à pouvoir être actionné avant le début de l'enregistrement des nombres. (Fig. 3).

15. Dispositif selon la revendication 11, caractérisé en ce que le dispositif de choix des opérations arithmétiques est agencé de façon à pouvoir être actionné après l'enregistrement de chaque nombre. (Fig. 6).

16. Dispositif selon la revendication 11, caractérisé en ce que le dispositif de choix des opérations arithmétiques est agencé de façon à pouvoir être actionné après la fin de l'enregistrement de tous les nombres.

17. Dispositif selon la revendication 11, caractérisé en ce que le dispositif d'association d'une opération à un nombre enregistré est agencé de façon à pouvoir être activé après l'enregistrement de chaque nombre individuel.

18. Dispositif selon la revendication 11, caractérisé en ce que le dispositif d'association d'une opération à un nombre enregistré est agencé de façon à pouvoir être activé après l'enregistrement du dernier nombre.

19. Dispositif selon la revendication 11, caractérisé en ce que le dispositif de choix d'une opération déterminée est accouplé à un dispositif de reconnaissance et d'exploitation du sens de déplacement du dispositif de reconnaissance optique de signes le long de la colonne de nombres, afin de sélectionner une première opération pour l'un des sens de déplacement et l'opération inverse de cette dernière pour le sens opposé de déplacement. (Fig. 11).

20. Dispositif selon la revendication 19, caractérisé en ce que la première opération est une addition.
